# EUROPÄISCHE PATENTSCHRIFT

(11) **EP 3 848 517 B1**
(45) Veröffentlichungstag und Bekanntmachung des Hinweises auf die Patenterteilung: **09.02.2022**
(21) Anmeldenummer: 20150755.5
(22) Anmeldetag: 08.01.2020
(51) Int. Cl.: E03C 1/02

(54) **FLUIDVERTEILEREINHEIT FÜR SANITÄRE UMSTELLARMATUREN**
FLUID DISTRIBUTOR UNIT FOR SANITARY REPLACEMENT FITTINGS
UNITÉ DE DISTRIBUTION DE FLUIDE POUR ARMATURES DE RÉGLAGE SANITAIRE

(43) Veröffentlichungstag der Anmeldung: 14.07.2021
(73) Patentinhaber: Flühs Drehtechnik GmbH, 58515 Lüdenscheid (DE)
(72) Erfinder: Thurau, Friedrich, 58849 Herscheid (DE); WENDT, Jörg, 58509 Lüdenscheid (DE)
(74) Vertreter: Patentanwälte Dörner & Kötter PartG mbB

(56) Entgegenhaltungen:
- EP-A1- 3 144 433
- EP-A2- 1 703 026
- DE-U1- 20 319 169

## Beschreibung

Die Erfindung betrifft eine Verteilereinheit für sanitäre Umstellarmaturen zum Einbau in einer Wand nach dem Patentanspruch 1.

Sanitäre Unterputzbatterien umfassen üblicherweise einen Mischer, über den mechanisch oder auch thermostatisch eine gewünschte Wassertemperatur einstellbar ist. Insbesondere bei Dusch- oder Baderwannenarmaturen ist diesem Mischer eine Umstellarmatur nachgeschaltet, über die eine Zuordnung des Wasserflusses zu unterschiedlichen Entnahmestellen, wie beispielsweise Wanneneinlauf oder Duschzulauf einstellbar sind. Moderne Wellnessduschen können dabei sogar drei oder mehr Wasserentnahmestellen (wie beispielsweise Überkopfbrause, Handbrause, Seitenbrausen) aufweisen, welche über eine solche Umstellarmatur steuerbar sind. Die Steuerung des Wasserzuflusses erfolgt dabei über eine entsprechende Anzahl von Absperrventilen, die jeweils in einen Abzweig der von dem Mischer gespeisten Zulaufleitung angeordnet und über die Umstellarmatur bedienbar sind.

Als problematisch bei derartigen Umschaltarmaturen erweist sich in der Praxis die lagegerechte Verlegung der Leitungsanschlüsse durch den Leitungsmonteur, da die einzelnen Ventile bündig mit der Ebene der Wandoberfläche und lagerichtig in die Rohbauwand einzubauen sind. In der DE 78 20 423 U1 ist eine Unterputz-Einbaueinheit für sanitäre Mischbatterien mit Umstellung beschrieben. Hierbei wird vorgeschlagen, in die Wand einen Montagekasten mit in den Seitenwänden montierten Anschlussmitteln für die Heiß- und Kaltwasserzuleitungsrohre und für die Zapfstellenrohre einzusetzen. Die Anschlussmittel sind innerhalb des Montagekastens in Anschlussstutzen eines im diesem fixierten Batteriegehäuses eingeschraubt, das die Abstellventile von Kalt- und Warmwasser enthält und die Anschlussstellen für die zu montierenden Misch- und Umstellvorrichtungen aufweist. Die so gebildete Einbaueinheit ist auf der Baustelle bündig mit der Ebene der Wandoberfläche und lagerichtig in die Oberwand einzubauen und soll dem Leitungsmonteur als Lehre für den Leitungsanschluss dienen.

In der Praxis besteht jedoch auch bei dieser vorbekannten Einbauvorrichtung die Problematik des lagerichtigen Einbaus. Stellt sich bei der Endmontage der Armatur heraus, dass die Unterputz-Einbaueinheit nicht exakt lagerichtig positioniert ist, sind Korrekturen in der Regel nur unter hohem Aufwand möglich.

Hier will die Erfindung Abhilfe schaffen. Der Erfindung liegt die Aufgabe zugrunde, eine Verteilereinheit für sanitäre Umstellarmaturen zum Einbau in einer Wand bereitzustellen, bei der eine Nachjustierung zur wandbündigen Positionierung der angeordneten Umstellventile einfach ermöglicht ist. Gemäß der Erfindung wird diese Aufgabe durch eine Verteilereinheit mit den Merkmalen des Patentanspruchs 1 gelöst.

Mit der Erfindung ist eine Verteilereinheit für sanitäre Umstellarmaturen zum Einbau in einer Wand bereitgestellt, bei der eine einfache Nachjustierung zur wandbündigen Positionierung der angeordneten Absperrventile ermöglich ist. Dadurch, dass die Verteilereinheit aus einem Verteilerblock mit einem Zulaufkanal und wenigstens zwei Ablaufkanälen sowie einem Steuerblock mit einem Zulaufkanal und wenigstens zwei Ventilsitzen zur Aufnahme jeweils eines Ventiloberteils gebildet ist, die mit dem Zulaufkanal verbunden sind, wobei der Zulaufkanal des Verteilerblocks mit dem Zulaufkanal des Steuerblocks die Ablaufkanäle des Verteilerblocks mit jeweils einem Ventilsitz des Steuerkanals über jeweils ein Leitungsteil verbunden sind, wobei der Steuerblock mit dem Ventilblock über die Leitungsteile relativ zueinander bewegbar verbunden sind, ist die Lage des Steuerblocks relativ zu der Lage des Verteilerblocks justierbar. Auf der Baustelle kann nun der Verteilerblock in die Rohbauwand eingebaut werden, wonach der Leitungsanschluss an dem Verteilerblock erfolgt. Die exakte Positionierung des Steuerblocks kann später im Zuge der Montage der Armatur erfolgen. Lageabweichungen des in der Wand fest installierten Verteilerblocks können so einfach ausgeglichen werden.

In Weiterbildung der Erfindung ist wenigstens ein Leitungsteil als Teleskoprohr ausgebildet, das wenigstens zwei dichtend ineinandergeschobene Rohrteile umfasst. Hierdurch ist eine stabile Verbindung von Verteilerblock und Steuerblock bei gleichzeitiger Längenanpassung des Leitungsteils ermöglicht. Die als Teleskoprohr ausgebildeten Leitungsteile, die aus starren, ineinandergeschobenen Rohrteilen gebildet sind, ermöglichen eine stufenlose Anpassung des Abstandes zwischen Verteilerblock und Steuerblock. Dabei sind Verteilerblock und Steuerblock bevorzugt ausschließlich über die Leitungsteile verbunden.

Besonders bevorzugt sind alle Leitungsteile wie vorstehend beschrieben als Teleskoprohr ausgebildet. Es ist zwar auch möglich, einzelne Leitungsteile durch flexible Schläuche auszubilden. Hierdurch wäre jedoch die Stabilität der Verbindung von Verteilerblock und Steuerblock beeinträchtigt, was wiederum eine Anordnung zusätzlicher Verbindungselemente erfordern würde, welche derart auszubilden wären, dass die Justierbarkeit der Lage des Steuerblocks nicht beeinträchtigt ist.

In Ausgestaltung der Erfindung sind die Leitungsteile jeweils an ihren Enden kugelabschnittsförmig ausgebildet und mit einem Ende in einer Kugelpfanne des Verteilerrohrs mit dem anderen Ende in einer Kugelpfanne des Steuerblocks schwenkbar gehalten, wobei die Kugelpfanne des Steuerblocks jeweils in einem Zulaufkanal oder einem Ventilsitz münden und die Kugelpfanne des Verteilerblocks in einem Zulaufkanal oder einem Ablaufkanal münden. Hierdurch ist eine gelenkige Verbindung der Leitungsteile mit dem Verteilerblock sowie dem Steuerblock erzielt, wodurch eine einfache Lagekorrektur des Steuerblocks relativ zum Verteilerblock ermöglicht ist. Die Leitungsteile sind hierbei in Art eines Kugelgelenks mit dem Verteilerblock und den Steuerblock verbunden, wobei die Enden der Leitungsteile jeweils einen Gelenkkopf bilden, der in einer Kugelpfanne gelagert ist.

In weiterer Ausgestaltung der Erfindung ist wenigstens eine Kugelpfanne bereichsweise durch einen Schraubring gebildet, der in den Verteilerblock oder den Steuerblock eingeschraubt ist und über den ein kugelabschnittsförmiges Ende eines Leitungsteils schwenkbar befestigt ist. Hierdurch ist eine einfache Montage des Leitungsteils an dem Verteilerblock sowie dem Steuerblock ermöglicht. Der in den Verteilerblock oder den Steuerblock eingeschraubte Schraubring bildet gemeinsam mit diesem die Kugelpfanne für ein als Gelenckopf fungierendes kugelabschnittförmiges Ende eines Leitungsteils aus.

In Weiterbildung der Erfindung weist wenigstens eine Kugelpfanne wenigstens ein Dichtelement zur Abdichtung gegenüber einem von der Kugelpfanne aufgenommenen kugelabschnittförmigen Ende eines Leitungsteils auf. Hierdurch ist einem Wasseraustritt an den Leitungsanschlussstellen entgegengewirkt. Bevorzugt ist das Dichtelement durch einen Dichtring, insbesondere durch einen O-Ring gebildet. Das Dichtelement kann dabei in dem Schraubring und/oder in dem Verteilerblock bzw. dem Steuerblock angeordnet sein.

In Ausgestaltung der Erfindung weisen die Ventilsitze ein Innengewinde zum Einschrauben eines Ventileinsatzes auf. Hierdurch ist eine einfache Montage der Ventileinsätze, auch zu Reparaturzwecken, ermöglicht.

In weiterer Ausgestaltung der Erfindung ist der Verteilerblock quaderförmig ausgebildet, wobei wenigstens ein Ablaufkanal winklig ausgebildet und durch zwei benachbarte Seiten des Verteilerblocks geführt ist. Dabei ist der Ablaufkanal bevorzugt in einem Winkel von 90° ausgebildet. Hierdurch ist eine orthogonale Ausrichtung der Anschlussstellen der Leitungsteile zu den angeschlossenen Leitungen bewirkt. Selbstverständlich kann der Verteilerblock auch eine andere, bevorzugt längliche Form aufweisen, wobei die für die Montage in einem Wandausbruch vorgesehene Anlagefläche bevorzugt eben ausgebildet sein sollte.

In Weiterbildung der Erfindung weisen die Ablaufkanäle des Verteilerblocks jeweils ein Gewinde zum Anschluss einer Ablaufleitung auf. Hierdurch ist die Montage der Anschlussleitungen in der Wand vereinfacht. Bevorzugt ist das Gewinde als Innengewinde ausgebildet.

In Weiterbildung der Erfindung ist der Zulaufkanal des Verteilerblocks über ein Hauptventil mit wenigstens einer Fluidquelle verbunden. Dabei ist das Hauptventil bevorzugt ein Mischventil, insbesondere ein Thermostatventil, dass in bekannter Art und Weise mit einer Kaltwasserquelle und einer Warmwasserquelle verbunden ist.

In weiterer Ausgestaltung der Erfindung ist das Hauptventil über ein Leitungsteil mit dem Zulaufkanal verbunden, das ein kugelabschnittsförmiges Ende aufweist, das von einer in dem Zulaufkanal mündenden Kugelpfanne des Verteilerblocks schwenkbar aufgenommen ist. Hierdurch ist eine Lagejustierung zwischen Verteilerblock und Hauptventil ermöglicht.

In Weiterbildung der Erfindung ist in die Ventilsitze des Steuerblocks jeweils ein Absperrventileinsatz eingebracht, der einen seitlicher Zulauf aufweist, der mit dem Zulaufkanal in Verbindung steht, wobei der Auslauf des Absperrventileinsatzes dichtend mit dem zugeordneten Leitungsteil verbunden ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

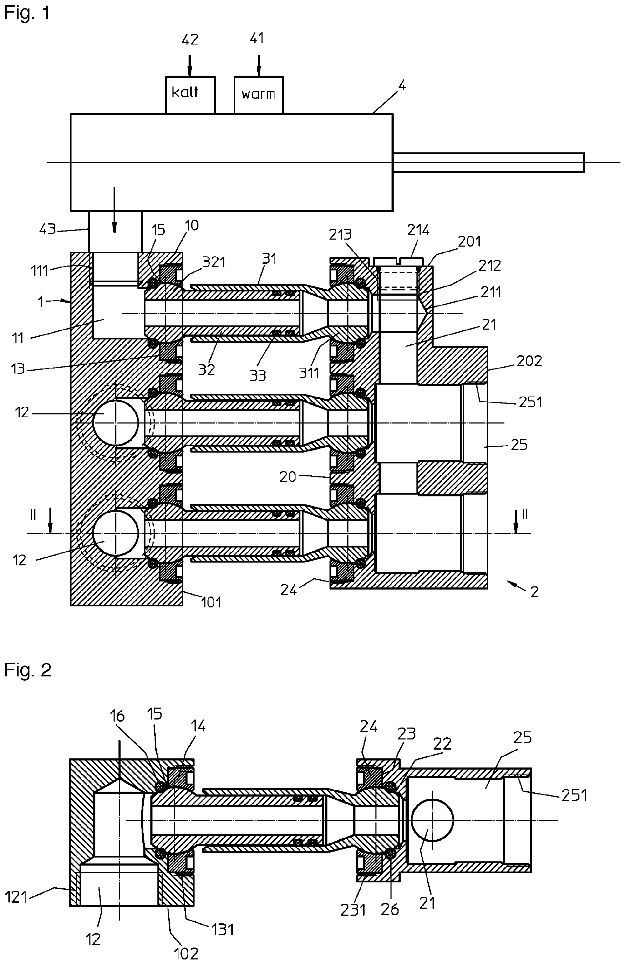

- Figur 1: die schematische Darstellung einer Verteilereinheit im Längsschnitt mit angedeutetem Hauptventil;
- Figur 2: die Darstellung der Verteilereinheit aus Figur 1 im Schnitt II-II;
- Figur 3: die schematische Darstellung der Verteilereinheit aus Figur 1 in einem Wandausbruch und
- Figur 4: die Einbausituation aus Figur 3 im Schnitt IV-IV.

Die als Ausführungsbeispiel gewählte Verteilereinheit besteht im Wesentlichen aus einem Verteilerblock 1 der über Leitungsteile 3 mit einem Steuerblock 2 verbunden ist. Der Verteilerblock 1 ist als quaderförmiger Messingblock ausgebildet und weist an einer Stirnseite 10 einen Zulaufkanal 11 auf, der um 90° abgewinkelt ist und in der dem Steuerblock 2 zugewandten Deckfläche 101 des Verteilerblocks 1 mündet. Stirnseitig ist der Zulaufkanal 11 mit einem Innengewinde 111 zum Anschluss der Ablaufleitung 43 eines Thermostatmischventils 4 versehen. Beabstandet zu dem Zulaufkanal 11 sind in einer zur Deckfläche 101 benachbarten Seitenfläche 102 zwei Ablaufkanäle 12 angeordnet, die um 90° abgewinkelt sind und in der Deckfläche 101 des Verteilerblocks 1 münden. Den Zulaufkanal 11 sowie die Ablaufkanäle 12 einrahmend ist konzentrisch zu diesen in den Verteilerblock 1 jeweils eine hohlzylindrische Ausnehmung 13 eingebracht, die mit einem Innengwinde 131 versehen ist, in das jeweils ein Schraubring 14 eingeschraubt ist. Die Innenwandung der Schraubringe 14 ist kugelabschnittsförmig nach innen gewölbt ausgebildet. Diese Auswölbung ist in den Übergang der hohlzylindrischen Ausnehmung 13 zum Ablaufkanal 12, bzw. zum Zulaufkanal 11 fortgesetzt, so dass eine Kugelpfanne 15 gebildet ist in der jeweils ein Gelenkkopf 321 eines Leitungsteils 3 schwenkbar gelagert ist. Im Übergang des Zulaufkanals 11 sowie der Ablaufkanäle 12 zu der jeweiligen hohlzylindrischen Ausnehmung 13 ist jeweils eine Ringnut eingebracht, in die ein O-Ring 16 zur Abdichtung des Leitungsteils 3 gegenüber dem Zulaufkanal 1 bzw. den Ablaufkanälen 12 eingebracht ist. An ihrem der Seitenfläche 102 zugewandtem Ende sind die Ablaufkanäle 12 jeweils mit einem Innengewinde 121 zum Anschluss von Installationsleitungen versehen.

Der Steuerblock 2 ist im Ausführungsbeispiel als quaderförmiger Messingblock ausgebildet. In seiner dem Verteilerblock 1 zugewandten Unterseite 20 ist eine erste Sackbohrung 211 eingebracht, die in einer zentrisch in die Stirnseite 201 des Steuerblocks 2 eingebrachte zweite Sackbohrung 212 mündet. Die zweite Sackbohrung 212 ist stirnseitig mit einem Innengewinde 213 versehen, in das eine Verschlussschraube 214 eingeschraubt ist. Durch die erste Sackbohrung 211 und die zweite Sackbohrung 212 ist ein Zulaufkanal 21 gebildet.

Analog zu der Ausgestaltung der Deckfläche 101 des Verteilerblocks 1 sind in die Unterseite 20 des Steuerblocks 2 beabstandet zueinander drei Kugelpfannen 22 zur Aufnahme jeweils eines Gelenkkopfes 311 eines Leitungsteils 3 angeordnet. Dabei mündet eine Kugelpfanne 22 in die erste Sackbohrung 211 des Zulaufkanals 21. Jeweils eine weitere Kugelpfanne 22 mündet in einem in die Deckfläche 202 des Steuerblocks 2 eingebrachten hohlzylindrischen Ventilsitz 25. Die Kugelpfannen 22 einrahmend ist wiederum jeweils eine hohlzylindrische Ausnehmung 23 in den Steuerblock 2 eingebracht, die mit einem Innengewinde 231 versehen ist, in das ein Schraubring 24 eingeschraubt ist. Die Innenkontur des Schraubrings 24 bildet dabei wiederum gemeinsam mit dem Übergang der ersten Sackbohrung 211 bzw. eines Ventilsitzes 25 zu der hohlzylindrischen Ausnehmung 23 die kugelabschnittsförmige Kontur der Kugelpfanne 22, wobei in den Übergängen wiederum eine Ringnut eingebracht ist, die jeweils einen O-Ring 26 zur Abdichtung des Steuerblocks 2 gegenüber dem jeweils von der Kugelpfanne 22 aufgenommenen Gelenkkopf 311 aufgenommen ist. Die Ventilsitze 25 sind an ihrem deckseitigen Ende mit einem Innengewinde 251 zum Einschrauben eines - nicht dargestellten - Absperrventileinsatzes versehen.

Die Leitungsteile 3 sind im Ausführungsbeispiel durch ein erstes Rohrteil 31 und ein in dieses eingeschobenes zweites Rohrteil 32 gebildet, wobei an seinem dem zweiten Rohrteil 32 entgegengesetzten Ende an dem ersten Rohrteil 31 ein Gelenkkopf 311 angeformt ist. An seinem dem ersten Rohrteil 31 abgewandten Ende ist entsprechend an dem zweiten Rohrteil 32 ein Gelenkkopf 321 angeformt. An seinem dem ersten Rohrteil 31 zugewandten Ende sind in das zweite Rohrteil 32 außen umlaufend zwei parallel zueinander angeordnete Ringnuten eingebracht, in die jeweils ein O-Ring 33 zur Abdichtung gegenüber dem ersten Rohrteil 31 positioniert ist.

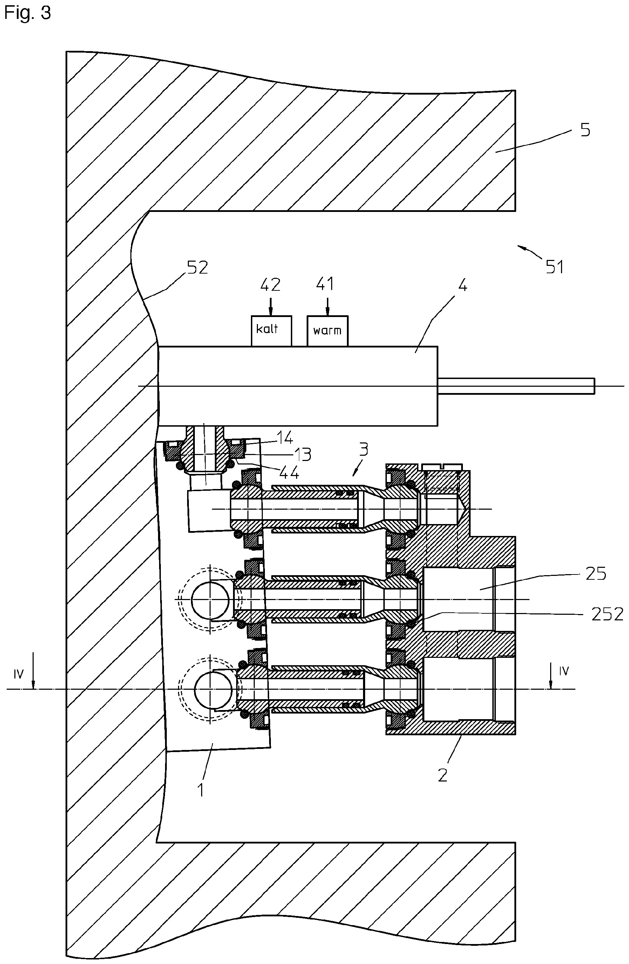

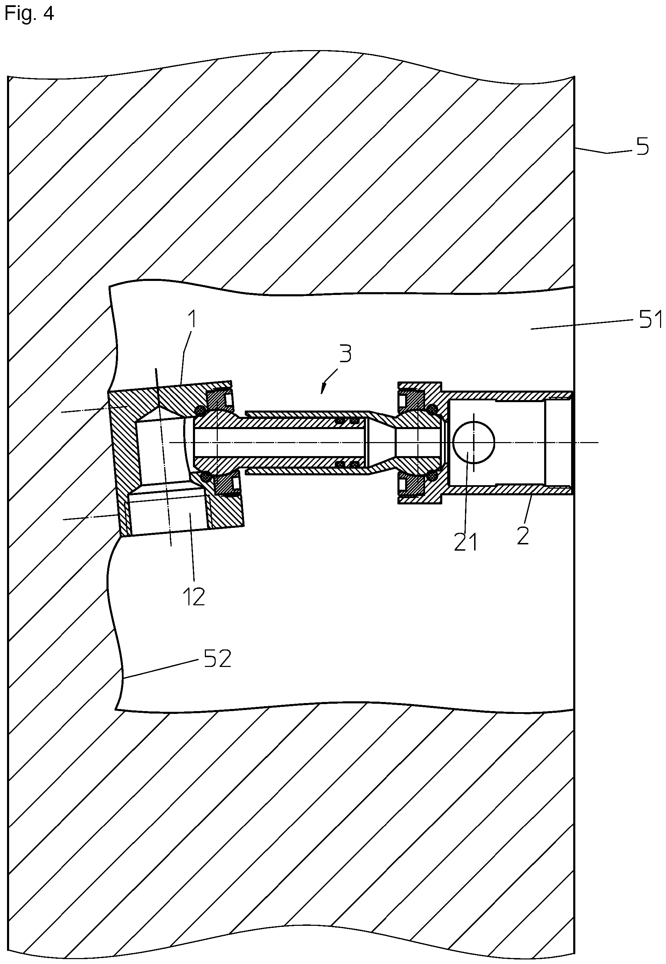

In Figur 3 ist eine Einbausituation einer erfindungsgemäßen Verteilereinheit dargestellt. Hierbei ist der Verteilerblock 1 auf dem Grund 52 eines in eine Wand 5 eingebrachten Wandausbruchs 51 befestigt. Wie in den Figuren 3 und 4 angedeutet ist der Grund des Wandausbruchs nicht eben ausgebildet. An den Zulaufkanal 11 des Verteilerblocks 1 ist die Ablaufleitung 43 eines Thermostatventils 4 angeschlossen, welches ebenfalls an dem Grund 52 des Wandausbruchs 51 befestigt ist. Das Thermostatventil 4 ist mit seinem Warmwasserzulaufanschluss 41 mit einer - nicht dargestellten - Warmwasserquelle und mit seinem Kaltwasserzulaufanschluss 42 an einer - nicht dargestellten - Kaltwasserquelle verbunden. Im Ausführungsbeispiel gemäß Figur 3 ist die Ablaufleitung 43 des Thermostat-Mischventils 4 endseitig mit einem kugelabschnittsförmig ausgebildeten Gelenkkopf 44 versehen, wobei der Zulaufkanal 11 des Verteilerblocks 1 analog zu den vorstehenden Ausführungen in eine Kugelpfanne 15 mündet, die den Gelenkkopf 44 der Ablaufleitung 43 des Thermostatmischventils 4 aufnimmt. Dabei ist die Kugelpfanne 15 wiederum von einer hohlzylindrischen Ausnehmung 13 eingerahmt, in die ein Schraubring 14 eingeschraubt ist, dessen Innenkontur Bestandteil der Kugelpfanne 15 ist und über den der Gelenkkopf 44 an dem Verteilerblock 1 schwenkbar gehalten ist.

Der Steuerblock 2 ist über die Leitungsteile 3 mit dem Verteilerblock 1 verbunden, der an dem Grund 52 des Wandausbruchs 51 befestigt ist. Durch die teleskopartige Ausgestaltung der Leitungsteile 3 sowie deren kugelgelenkartige Verbindung mit dem Verteilerblock 1 einerseits und dem Steuerblock 2 andererseits, ist eine einfache Ausrichtung des Steuerblocks 2 ermöglicht, ohne dass eine Lagekorrektur des in dem Wandausbruch 51 befestigten Verteilerblocks 1 erforderlich ist.

In die Ventilsitze 25 des Steuerblocks 2 wird nun jeweils ein Absperrventileinsatz eingebracht, der einen seitlichen Zulauf aufweist sowie einen bodenseitigen Ablauf, der über eine Steuerscheibe verschließbar ist und mit einem Dichtring in Berührung steht. Der Absperrventileinsatz - allgemein auch als Ventilkartusche oder Ventiloberteil bezeichnet - wird in bekannter Art und Weise über eine mit einem Außengewinde versehene Überwurfhülse, die in das Innengewinde 251 des Ventilsitzes 25 eingeschraubt wird, fixiert und mit dem Dichtring des Ablaufs gegen den Dichtsitz 252 des Ventilsitzes 25 vorgespannt. Absperrventileinsätze der vorstehenden Art sind allgemein bekannt und beispielsweise in der EP 1 462 692 A1 beschrieben.

Je nach Ventilstellung eines in einem Ventilsitz 25 montierten Ventiloberteils wird der Zulauf zu dem Leitungsteil 3, das von der in den Ventilsitz 25 mündenden Kugelpfanne 22 aufgenommenen ist, gewährt oder versperrt. Unabhängig von der Ventilstellung ist eine ungehinderte Durchströmung des Zulaufkanals 21 des Steuerblocks 2 gewährleistet.

## Patentansprüche

1. Verteilereinheit für sanitäre Umstellarmaturen zum Einbau in einer Wand (5), umfassend einen Verteilerblock (1) mit einem Zulaufkanal (11) und wenigstens zwei Ablaufkanälen (12) sowie einen Steuerblock (2) mit einem Zulaufkanal (21) und wenigstens zwei Ventilsitzen (25) zur Aufnahme jeweils eines Ventiloberteils, die mit dem Zulaufkanal (21) verbunden sind, wobei der Zulaufkanal (11) des Verteilerblocks (1) mit dem Zulaufkanal (21) des Steuerblocks (2) und die Ablaufkanäle (12) des Verteilerblocks (1) mit jeweils einem Ventilsitz (25) des Steuerblocks (2) über jeweils ein Leitungsteil (3) verbunden sind und wobei der Steuerblock (2) mit dem Verteilerblock (1) über die Leitungsteile relativ zueinander bewegbar verbunden ist.

2. Verteilereinheit nach Anspruch 1, **dadurch gekennzeichnet, dass** der Steuerblock (2) ausschließlich über die Leitungsteile (3) mit dem Verteilerblock verbunden ist.

3. Verteilereinheit nach Anspruch 1 oder 2, **dadurch gekennzeichnet, dass** wenigstens ein Leitungsteil (3) als Teleskoprohr ausgebildet ist, das wenigstens zwei dichtend ineinandergeschobene Rohrteile (31, 32) umfasst.

4. Verteilereinheit nach einem der Ansprüche 1 bis 3, **dadurch gekennzeichnet, dass** die Leitungsteile (3) jeweils an ihren Enden kugelabschnittsförmig ausgebildet sind und mit einem Ende in einer Kugelpfanne (15) des Verteilerblocks (1) und mit dem anderen Ende in einer Kugelpfanne (22) des Steuerblocks (2) schwenkbar gehalten sind, wobei die Kugelpfannen (22) des Steuerblocks (2) jeweils in einem Zulaufkanal (21) oder einem Ventilsitz (25) münden und die Kugelpfannen (15) des Verteilerblocks (1) in einem Zulaufkanal (11) oder einem Ablaufkanal (12) münden.

5. Verteilereinheit nach Anspruch 4, **dadurch gekennzeichnet, dass** wenigstens eine Kugelpfanne (15, 22) bereichsweise durch einen Schraubring (14, 24) gebildet ist, der in den Verteilerblock (1) oder den Steuerblock (2) eingeschraubt ist und über den ein kugelabschnittsförmiges Ende eines Leitungsteils (3) schwenkbar befestigt ist.

6. Verteilereinheit nach Anspruch 4 oder 5, **dadurch gekennzeichnet, dass** wenigstens eine Kugelpfanne (15, 22) wenigstens ein Dichtelement, insbesondere einen Dichtring zur Abdichtung gegenüber einem von der Kugelpfanne (15, 22) aufgenommenen kugelabschnittsförmigen Ende eines Leitungsteils (3) aufweist.

7. Verteilereinheit nach einem der vorgenannten Ansprüche, **dadurch gekennzeichnet, dass** wenigstens ein Ventilsitz (25) ein Innengewinde zum Einschrauben eines Ventileinsatzes aufweist.

8. Verteilereinheit nach einem der vorgenannten Ansprüche, **dadurch gekennzeichnet, dass** der Verteilerblock (1) quaderförmig ausgebildet ist, wobei wenigstens ein Ablaufkanal (12) winklig ausgebildet und durch zwei benachbarte Seiten des Verteilerblocks (1) geführt ist.

9. Verteilereinheit nach einem der vorgenannten Ansprüche, **dadurch gekennzeichnet, dass** die Ablaufkanäle (12) des Verteilerblocks jeweils ein Gewinde zum Anschluss einer Ablaufleitung aufweisen.

10. Verteilereinheit nach einem der vorgenannten Ansprüche, **dadurch gekennzeichnet, dass** der Zulaufkanal (11) des Verteilerblocks (1) über ein Hauptventil mit wenigstens einer Fluidquelle verbunden ist.

11. Verteilereinheit nach Anspruch 10, **dadurch gekennzeichnet, dass** das Hauptventil ein Mischventil, bevorzugt ein Thermostatmischventil (4) ist, das mit einer Kaltwasserquelle und einer Warmwasserquelle verbunden ist.

12. Verteilereinheit nach Anspruch 10 oder 11, **dadurch gekennzeichnet, dass** das Hauptventil über ein Leitungsteil (3) mit dem Zulaufkanal (11) verbunden ist, das ein kugelabschnittförmiges Ende aufweist, das von einer in dem Zulaufkanal (11) mündenden Kugelpfanne (15) des Verteilerblocks (1) schwenkbar aufgenommen ist.

13. Verteilereinheit nach einem der vorgenannten Ansprüche, **dadurch gekennzeichnet, dass** in die Ventilsitze (25) des Steuerblocks (2) jeweils ein Absperrventileinsatz eingebracht ist, der einen seitlichen Zulauf aufweist, der mit dem Zulaufkanal in Verbindung steht, wobei der Auslauf des Absperrventileinsatzes dichtend mit dem zugeordneten Leitungsteil (3) verbunden ist.

## Claims

1. Distributor unit for sanitary changeover fittings for installation in a wall (5) comprising a distribution block (1) with an inlet channel (11) and at least two outlet channels (12) as well as a control block (2) with an inlet channel (21) and at least two valve seats (25) for receiving a valve top each, which are connected to the inlet channel (21), wherein the inlet channel (11) of the distribution block (1) is connected to the inlet channel (21) of the control block (2) and the outlet channels (12) of the distribution block (1) are each connected to a valve seat (25) of the control block (2) via a line section (3) each and wherein the control block (2) is connected to the distribution block (1) via the line sections so as to be movable relative to one another.

2. Distributor unit according to claim 1, **characterised in that** the control block (2) is connected to the distribution block exclusively via the line sections (3).

3. Distributor unit according to claim 1 or 2, **characterised in that** at least one line section (3) is designed as a telescopic pipe, which comprises at least two pipe parts (31, 32) sealingly pushed into each other.

4. Distributor unit according to one of claims 1 to 3, **characterised in that** the line sections (3) are each formed in the shape of a spherical section at their ends and are pivotably held with one end in a ball socket (15) of the distributor block (1) and with the other end in a ball socket (22) of the control block (2), wherein the ball sockets (22) of the control block (2) each open into an inlet channel (21) or a valve seat (25) and the ball sockets (15) of the distributor block (1) each open into an inlet channel (11) or an outlet channel (12).

5. Distributor unit according to claim 4, **characterised in that** at least one ball socket (15, 22) is formed by a screw ring (14, 24) in certain regions, which is screwed into the distributor unit (1) or the control block (2) and via which a spherical section-shaped end of a line section (3) is pivotably attached.

6. Distributor unit according to claim 4 or 5, **characterised in that** the at least one ball socket (15, 22) has at least one sealing element, in particular a sealing ring for sealing against a spherical section-shaped end of a line section (3) received by the ball socket (15, 22).

7. Distributor unit according to one of the previous claims, **characterised in that** the at least one valve seat (25) has an internal thread for screwing in a valve insert.

8. Distributor unit according to one of the previous claims, **characterised in that** the distribution block (1) is cuboid-shaped, wherein at least one outlet channel (12) is angled and is guided through two adjacent sides of the distribution block (1).

9. Distributor unit according to one of the previous claims, **characterised in that** the outlet channels (12) of the distribution block each have a thread for connecting a drain line.

10. Distributor unit according to one of the previous claims, **characterised in that** the inlet channel (11) of the distribution block (1) is connected to at least one fluid source via a main valve.

11. Distributor unit according to claim 10, **characterised in that** the main valve is a mixing valve, preferably a thermostatic mixing valve (4), which is connected to a cold water source and a hot water source.

12. Distributor unit according to claim 10 or 11, **characterised in that** the main valve is connected to the inlet channel (11) via a line section (3), which has a spherical section-shaped end, which is pivotably received by a ball socket (15) of the distribution block (1) opening into the inlet channel (11).

13. Distributor unit according to one of the previous claims, **characterised in that** a shut-off valve insert is inserted into each of the valve seats (25) of the control block (2), which insert has a lateral inlet, which is in connection with the inlet channel, wherein the outlet of the shut-off valve insert is sealingly connected to the assigned line section (3).

## Revendications

1. Unité de distribution pour robinetteries sanitaires de conversion à incorporer dans un mur (5), comprenant un bloc distributeur (1) avec un conduit d'arrivée (11) et au moins deux conduits d'écoulement (12) ainsi qu'un bloc de commande (2) avec un conduit d'arrivée (21) et au moins deux sièges (25) de vanne destinés à recevoir chacun une partie supérieure de vanne, sièges qui sont reliés au conduit d'arrivée (21), sachant que le conduit d'arrivée (11) du bloc distributeur (1) est relié au conduit d'arrivée (21) du bloc de commande (2) et que les conduits d'écoulement (12) du bloc distributeur (1) sont reliés avec respectivement un siège (25) de vanne du bloc de commande (2) via respectivement une partie (3) de conduite et sachant que le bloc de commande (2) et le bloc distributeur (1) sont reliés de façon réciproquement mobile via les parties de conduite.

2. Unité de distribution selon la revendication 1, **caractérisée en ce que** le bloc de commande (2) est relié au bloc distributeur exclusivement via les parties (3) de conduite.

3. Unité de distribution selon la revendication 1 ou 2, **caractérisée en ce qu'**au moins une partie (3) de conduite est configurée en tube télescopique comprenant au moins deux tubes (31, 32) enfilés l'un dans l'autre pour créer une étanchéité.

4. Unité de distribution selon l'une des revendications 1 à 3, **caractérisée en ce que** les parties (3) de conduite sont respectivement configurées, en leurs extrémités, en forme de segment sphérique et qu'elles sont maintenues, tout en pouvant pivoter, par une extrémité dans un coussinet sphérique (15) du bloc distributeur (1) et par l'autre extrémité dans un coussinet sphérique (22) du bloc de commande (2), sachant que les coussinets sphériques (22) du bloc de commande (2) aboutissent respectivement dans un conduit d'arrivée (21) ou un siège (25) de vanne et que les coussinets sphériques (15) du bloc distributeur (1) aboutissent dans un conduit d'arrivée (11) ou un conduit d'écoulement (12).

5. Unité de distribution selon la revendication 4, **caractérisée en ce qu'**au moins un coussinet sphérique (15, 22) est formé localement par une bague filetée (14, 24) vissée dans le bloc distributeur (1) ou le bloc de commande (2) et via laquelle est fixée, tout en pouvant pivoter, une extrémité en forme de segment sphérique d'une partie (3) de conduite.

6. Unité de distribution selon la revendication 4 ou 5, **caractérisé en ce qu'**au moins un coussinet sphérique (15, 22) présente au moins un élément d'étanchéité, notamment une bague d'étanchéité pour étanchéiser par rapport à une extrémité - d'une partie (3) de conduite - en forme de segment sphérique reçue par le coussinet sphérique (15, 22).

7. Unité de distribution selon l'une des revendications précédentes, **caractérisée en ce qu'**au moins un siège de vanne (25) présente un filetage intérieur pour visser un insert de vanne.

8. Unité de distribution selon l'une des revendications précédentes, **caractérisée en ce que** le bloc distributeur (1) est configuré de forme parallélépipédique, sachant qu'au moins un conduit d'écoulement (12) est configuré en angle et est conduit à travers deux côtés voisins du bloc distributeur (1).

9. Unité de distribution selon l'une des revendications précédentes, **caractérisée en ce que** les conduits d'écoulement (12) du bloc distributeur présentent chacun un filetage pour raccorder une conduite d'écoulement.

10. Unité de distribution selon l'une des revendications précédentes, **caractérisée en ce que** le conduit d'arrivée (11) du bloc distributeur (1) est relié via une vanne principale à au moins une source de fluide.

11. Unité de distribution selon la revendication 10, **caractérisée en ce que** la vanne principale est un mitigeur, de préférence un mitigeur thermostatique (4) relié à une source d'eau froide et à une source d'eau chaude.

12. Unité de distribution selon la revendication 10 ou 11, **caractérisé en ce que** la vanne principale est reliée au conduit d'arrivée (11) via une partie (3) de conduite, conduit qui présente une extrémité en forme de segment sphérique reçu - tout en pouvant pivoter - par un coussinet sphérique (15) du bloc distributeur (1), coussinet qui aboutit dans le conduit d'arrivée (11).

13. Unité de distribution selon l'une des revendications précédentes, **caractérisée en ce que** dans les sièges (25) de vanne du bloc de commande (2) a été introduit respectivement un insert pour vanne d'arrêt, insert qui présente une arrivée latérale se trouvant en liaison avec le conduit d'arrivée, sachant que la sortie de l'insert pour vanne d'arrêt est reliée de façon étanche à la partie (3) de conduite attribuée.
